# EUROPÄISCHE PATENTANMELDUNG

(11) **EP 2 272 671 A2**
(43) Veröffentlichungstag der Anmeldung: **12.01.2011**
(21) Anmeldenummer: 10166251.8
(22) Anmeldetag: 17.06.2010
(51) Int. Cl.: B41F 33/00, B41F 33/02, G06K 9/28

(54) **Druckmaschine**

(30) Priorität: 29.06.2009 DE 102009027265
(71) Anmelder: manroland AG, 63075 Offenbach (DE)
(72) Erfinder: Boosmann, Thomas, 63075, Offenbach (DE)

(57) **Zusammenfassung**

Die Erfindung betrifft ein Druckmaschine, mit mehreren Druckwerken zum Bedrucken eines Bedruckstoffs, mit mindestens einer Einrichtung, die Wärme in die Druckmaschine einträgt, und mit mindestens einem Sensor, insbesondere mindestens einem Druckqualitätssensor, der Messwerte aufnimmt und einer Steuerungseinrichtung der Druckmaschine bereitstellt, um auf Basis der Messwerte den Betrieb der Druckmaschine zu überwachen und/oder zu steuern und/oder zu regeln. Erfindungsgemäß ist mindestens ein Sensor temperiert, insbesondere gekühlt.

## Beschreibung

Die Erfindung betrifft eine Druckmaschine nach dem Oberbegriff des Anspruchs 1.

Eine Druckmaschine verfügt über mehrere Druckwerke zum Bedrucken eines Bedruckstoffs. Dies trifft sowohl für als Bogendruckmaschinen ausgebildete Druckmaschinen als auch für als Rollendruckmaschinen ausgebildete Druckmaschinen zu. Eine Druckmaschine verfügt weiterhin über mindestens eine Einrichtung, die Wärme in die Druckmaschine einträgt und so für eine Temperaturerhöhung an der Druckmaschine sorgt. Bei den Einrichtungen, die in die Druckmaschine Wärme eintragen, kann es sich um Motoren, Trocknungseinrichtungen sowie Beleuchtungseinrichtungen oder andere Einrichtungen mit einer Leistungsaufnahme an elektrischer Energie handeln. Ferner umfasst eine solche Druckmaschine mindestens einen Sensor, der Messwerte aufnimmt und einer Steuerungseinrichtung der Druckmaschine bereitstellt, die dann auf Grundlage der vom Sensor bereitgestellten Messwerte den Betrieb der Druckmaschine überwacht und/oder steuert und/oder regelt. So sind in einer Druckmaschine als Sensoren Druckqualitätssensoren verbaut, mithilfe derer die sich beim Bedrucken des Bedruckstoffs ausbildende Druckqualität erfasst werden kann. Zusätzlich zu solchen Druckqualitätssensoren sind weitere Sensoren an einer Druckmaschine verbaut.

Damit die in einer Druckmaschine verbauten Sensoren zuverlässige Messwerte bereitstellen, auf Grundlage derer der Betrieb der Druckmaschine zuverlässig überwacht und/oder gesteuert und/oder geregelt werden kann, müssen dieselben in einem definierten Temperaturbereich betrieben werden. Eine unzulässig starke Erhitzung und/oder Abkühlung der Sensoren kann dazu führen, dass die bereitgestellten Messwerte zu ungenau sind, um auf Grundlage derer den Betrieb der Druckmaschine zu überwachen und/oder zu steuern und/oder zu regeln.

Hiervon ausgehend liegt der vorliegenden Erfindung das Problem zugrunde eine neuartige Druckmaschine zu schaffen. Dieses Problem wird durch eine Druckmaschine gemäß Anspruch 1 gelöst. Erfindungsgemäß ist mindestens ein Sensor temperiert, insbesondere gekühlt.

Mit der hier vorliegenden Erfindung wird erstmals vorgeschlagen, Sensoren einer Druckmaschine zu temperieren. Dadurch ist es möglich, auch dann, wenn viel Wärme in die Druckmaschine und damit in die Sensoren eingetragen wird, die Sensoren in einem definierten Temperaturbereich zu betreiben, sodass dieselben stets zuverlässige Messwerte bereitstellen, auf Grundlage derer der Betrieb der Druckmaschine zuverlässig überwacht und/oder gesteuert und/oder geregelt werden kann. Bei der Temperierung, insbesondere Kühlung, der Sensoren können sämtliche Temperatureinflüsse sämtlicher in der Druckmaschine verbauter Wärmequellen sowie Temperatureinflüsse von nicht zur Druckmaschine gehörenden Einrichtungen sowie Umgebungstemperatureinflüsse über die Außentemperatur in einem Drucksaal, in welchem die Druckmaschine aufgebaut ist, zuverlässig kompensiert werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, nachfolgend näher erläutert.

Die hier vorliegende Erfindung betrifft eine Druckmaschine, insbesondere eine Bogendruckmaschine oder eine Rollendruckmaschine. Eine solche Druckmaschine verfügt über mehrere Druckwerke zum Bedrucken eines Bedruckstoffs.

Eine solche Druckmaschine verfügt weiterhin über mindestens eine Einrichtung, die in die Druckmaschine Wärme einträgt und so zu einer Temperaturerhöhung an der Druckmaschine führt.

Bei Einrichtungen, die Wärme in die Druckmaschine eintragen, kann es sich um Beleuchtungseinrichtungen, Trocknungseinrichtungen, Motoren oder sonstige Aggregate handeln, die elektrische Leistung aufnehmen.

Weiterhin verfügt eine Druckmaschine über mindestens einen Sensor, der während des Betriebs der Druckmaschine Messwerte aufnimmt und dieselben einer Steuerungseinrichtung der Druckmaschine bereitstellt, die dann auf Grundlage der von den Sensoren bereitgestellten Messwerte den Betrieb der Druckmaschine überwacht und/oder steuert und/oder regelt.

Bei einem solchen Sensor kann es sich zum Beispiel um einen Druckqualitätssensor handeln, der den bedruckten Bedruckstoff messtechnisch erfasst und die sich so im Druckbetrieb ausbildende Druckqualität erfasst. So können Druckqualitätssensoren eine Farbmessung und/oder Dichtemessung ausführen. Weiterhin können Druckqualitätssensoren als Kameras oder Kontaktbildsensoren bzw. Contact-Image Sensoren ausgebildet sein, wobei bei Kontaktbildsensoren der eigentliche Sensor zusammen mit einer Beleuchtungseinrichtung in einem gemeinsamen Gehäuse positioniert ist.

Im Sinne der hier vorliegenden Erfindung wird nun vorgeschlagen, dass mindestens ein Sensor der Druckmaschine temperiert, insbesondere gekühlt ist. Dadurch ist es möglich, den oder jeden insbesondere gekühlten Sensor in einem definierten Temperaturbereich zu betreiben, um so auch dann, wenn viel Wärme in die Druckmaschine eingetragen wird, eine unzulässig hohe Erhitzung des jeweiligen Sensors, die zu unbrauchbaren Messergebnissen führen würde, zu vermeiden.

Dies ist insbesondere bei Druckqualitätssensoren von Bedeutung, da es sich bei Druckqualitätssensoren um Sensoren handelt, die hinsichtlich einer Überhitzung besonders empfindlich sind.

Überhitzte Druckqualitätssensoren können im Falle einer Überhitzung nämlich keine zuverlässigen Messwerte über die Druckqualität bereitstellen, sodass sich dann ein ungenauer Betrieb der Druckmaschine ausbilden und Makulatur gedruckt werden würde. Druckqualitätssensoren weisen im Allgemeinen die Eigenschaft auf, dass die Vertrauenswürdigkeit der Messwerte mit steigender Temperatur abnimmt, unabhängig davon, ob eine zulässige Höchsttemperatur überschritten wird. Auch ohne eine Überhitzung der Druckqualitätssensoren ist es im Sinne der Erfindung möglich, dieselben zu kühlen.

Nach einer ersten vorteilhaften Weiterbildung der Erfindung ist eine Temperatur des oder jedes insbesondere gekühlten Sensors messbar und abhängig hiervon der jeweilige Sensor geregelt temperierbar. Hierzu wird die Temperatur des jeweiligen insbesondere zu kühlenden Sensors mithilfe eines Temperatursensors messtechnisch erfasst, wobei der Temperatursensor ebenfalls temperiert sein kann. Dann, wenn auf Grundlage des Messwerts des Temperatursensors festgestellt wird, dass die Temperatur des jeweiligen insbesondere zu kühlenden Sensors einen Grenzwert überschreitet, so wird der jeweilige Sensor geregelt gekühlt, sodass seine Isttemperatur sich einer Solltemperatur annähert. An dieser Stelle sei darauf hingewiesen, dass selbstverständlich auch dann, wenn die Temperatur des Sensors einen Grenzwert unterschreiten würde, der Sensor auf die Solltemperatur erhitzt werden kann.

Bei einer zweiten vorteilhaften Weiterbildung ist es möglich, eine Temperatur in der Umgebung des jeweiligen insbesondere zu kühlenden Sensors mithilfe eines Temperatursensors messtechnisch zu erfassen und abhängig hiervon den jeweiligen Sensor gesteuert zu kühlen. Weiterhin ist es nach einer anderen vorteilhaften Weiterbildung der Erfindung möglich, die Temperatur des jeweils insbesondere zu kühlenden Sensors aus einer Leistungsaufnahme mindestens einer die Temperatur des jeweiligen Sensors beeinflussenden Wärmequelle und/oder aus der Umgebungstemperatur zu errechnen und abhängig hiervon den jeweiligen Sensor gesteuert zu kühlen.

Die Temperierung, insbesondere Kühlung, des jeweiligen insbesondere zu kühlenden Sensors kann indirekt oder auch direkt erfolgen. Bei einer direkten Kühlung eines Sensors ist ein flüssiger oder gasförmiger Kühlstrom durch den jeweiligen zu kühlenden Sensor leitbar, um so von demselben Wärme abzuführen. Bei einer indirekten Kühlung erfolgt das Ableiten von Wärme vom jeweiligen zu kühlenden Sensor typischerweise über eine mechanische, wärmeleitende Anbindung eines Gehäuses des Sensors an die Druckmaschine.

Es liegt demnach im Sinne der hier vorliegenden Erfindung, in einer Druckmaschine verbaute Sensoren, und zwar insbesondere Sensoren, die der Erfassung einer sich beim Drucken ausbildenden Druckqualität dienen, zu kühlen, um die Qualität der von den Sensoren bereitgestellten Messwerte zu verbessern.

Hierdurch können durch alle in der Druckmaschine verbaute Wärmequellen verursachte Temperaturerhöhungen der Sensoren kompensiert werden, so auch Temperaturerhöhungen, die durch Trocknungseinrichtungen oder Baugruppen, die nicht unmittelbar zur Druckmaschine gehören, sowie Umgebungstemperatureinflüsse kompensiert werden. Die Kühlung kann dabei, wie bereits ausgeführt, direkt oder indirekt erfolgen. Bei einer direkten Kühlung kann ein zu kühlender Sensor an ein bereits vorhandenes Kühlsystem der Druckmaschine angeschlossen werden. Alternativ ist es möglich, dem Sensor eine separate Kühleinrichtung zuzuordnen. Wie ebenfalls bereits ausgeführt, ist es im Sinne der Erfindung auch möglich, dann, wenn eine Temperatur eines Sensors einen Grenzwert unterschreitet, den Sensor zu erwärmen, um so eine Unterkühlung des Sensors zu vermeiden.

## Patentansprüche

1. Druckmaschine, mit mehreren Druckwerken zum Bedrucken eines Bedruckstoffs, mit mindestens einer Einrichtung, die Wärme in die Druckmaschine einträgt, und mit mindestens einem Sensor, insbesondere mindestens einem Druckqualitätssensor, der Messwerte aufnimmt und einer Steuerungseinrichtung der Druckmaschine bereitstellt, um auf Basis der Messwerte den Betrieb der Druckmaschine zu überwachen und/oder zu steuern und/oder zu regeln, **dadurch gekennzeichnet, dass** mindestens ein Sensor temperiert, insbesondere gekühlt, ist.

2. Druckmaschine nach Anspruch 1, **dadurch gekennzeichnet, dass** jeder als Druckqualitätssensor ausgebildete Sensor temperiert, insbesondere gekühlt, ist.

3. Druckmaschine nach Anspruch 1, **dadurch gekennzeichnet, dass** mindestens ein temperierter, insbesondere gekühlter, Sensor als Kontaktbildsensor bzw. als Contact-Image Sensor ausgebildet ist, der zusammen mit einer Beleuchtungseinrichtung in einem gemeinsamen Gehäuse angeordnet ist.

4. Druckmaschine nach einem der Ansprüche 1 bis 3, **dadurch gekennzeichnet, dass** eine Temperatur des oder jedes temperierten, insbesondere gekühlten, Sensors messbar und abhängig hiervon der jeweilige Sensor geregelt temperierbar, insbesondere kühlbar, ist.

5. Druckmaschine nach einem der Ansprüche 1 bis 3, **dadurch gekennzeichnet, dass** eine Temperatur in der Umgebung des oder jedes temperierten, insbesondere gekühlten, Sensors messbar und abhängig hiervon der jeweilige Sensor gesteuert temperierbar, insbesondere kühlbar, ist.

6. Druckmaschine nach Anspruche 4 oder 5, **dadurch gekennzeichnet, dass** zur Temperaturmessung verwendete Sensoren ebenfalls temperiert, insbesondere gekühlt, sind.

7. Druckmaschine nach einem der Ansprüche 1 bis 3, **dadurch gekennzeichnet, dass** eine Temperatur des oder jedes temperierten, insbesondere gekühlten, Sensors aus einer Leistungsaufnahme mindestens einer die Temperatur des jeweiligen Sensors beeinflussenden Wärmequelle und/oder aus der Umgebungstemperatur errechenbar und abhängig hiervon der jeweilige Sensor gesteuert temperierbar, insbesondere kühlbar, ist.

8. Druckmaschine nach einem der Ansprüche 1 bis 7, **dadurch gekennzeichnet, dass** der oder jede temperierte, insbesondere gekühlte, Sensors direkt temperiert, insbesondere gekühlt, ist.

9. Druckmaschine nach Anspruche 8, **dadurch gekennzeichnet, dass** zur Kühlung ein flüssiger oder gasförmiger Kühlmittelstrom durch den jeweiligen Sensor leitbar ist.

10. Druckmaschine nach einem der Ansprüche 1 bis 7, **dadurch gekennzeichnet, dass** der oder jede temperierte, insbesondere gekühlte, Sensors indirekt temperiert, insbesondere gekühlt, ist.

11. Druckmaschine nach Anspruch 10, **dadurch gekennzeichnet, dass** zur Kühlung Wärme vom jeweiligen Sensor über eine mechanische, wärmeleitende Anbindung desselben ableitbar.
